Europäisches Patentamt

European Patent Office

Office européen des brevets

(11) Numéro de publication : **0 063 829**
**B1**

(12) **FASCICULE DE BREVET EUROPÉEN**

(45) Date de publication du fascicule du brevet :
26.09.84

(51) Int. Cl.³ : **C 02 F  1/72**, B 01 D 53/36,
**C 10 K   1/10**

(21) Numéro de dépôt : 82200345.5

(22) Date de dépôt : 19.03.82

(54) Traitement d'eaux et de gaz de rejet contenant des composés organiques sulfurés.

(30) Priorité : 31.03.81 FR 8106589

(43) Date de publication de la demande :
03.11.82 Bulletin 82/44

(45) Mention de la délivrance du brevet :
26.09.84 Bulletin 84/39

(84) Etats contractants désignés :
AT BE CH DE FR GB IT LI NL SE

(56) Documents cités :
EP-A- 0 008 074
EP-A- 0 017 796
EP-A- 0 022 525
FR-A- 2 271 862

(73) Titulaire : INTEROX Société anonyme dite:
Rue du Prince Albert, 33
B-1050 Bruxelles (BE)

(72) Inventeur : Stas, Georges
Rue Haute, 2
B-1340 Ottignies (BE)
Inventeur : Biver, Christian
Route de Steinfort, 18
Hagen (LU)

(74) Mandataire : Meyers, Liliane et al
Solvay & Cie Département de la propriété industrielle
310, rue de Ransbeek
B-1120 Bruxelles (BE)

EP 0 063 829 B1

Jouve, 18, rue St-Denis, 75001 Paris, France

**0 063 829**

**Description**

La présente invention concerne un procédé pour le traitement d'eaux et de gaz de rejet contenant des composés organiques sulfurés au moyen de composés peroxydés tels que le peroxyde d'hydrogène.

Les eaux d'égout des réseaux publics et certaines eaux de rejet industrielles, contiennent des composés organiques sulfurés malodorants et toxiques qui peuvent être responsables de la coloration des eaux.

Ainsi, dans l'industrie papetière, lors de la cuisson des copeaux de bois selon le procédé kraft, il se forme des composés organiques sulfurés tels que le méthylmercaptan, le diméthylsulfure et le diméthyldisulfure que l'on retrouve dans les liqueurs noires de cuisson, les condensats de cuisson, les eaux de lavage et les eaux de blanchiment de la pâte.

La présence de ces composés sulfurés dans ces effluents pose divers problèmes. Ainsi, la calcination des boues obtenues par concentration des liqueurs noires est accompagnée d'odeurs nauséabondes. De même, les condensats de cuisson, les eaux de lavage de la pâte écrue issue de la cuisson et éventuellement les eaux résiduaires de certaines étapes de blanchiment ne peuvent pas être rejetées tels quels du fait de leur coloration brunâtre et de leur odeur désagréable.

En vue d'éliminer ces composés organiques sulfurés, il est connu de les soumettre à une oxydation qui conduit à la formation de composés non odorants et non toxiques. Les composés peroxydés se sont révélés efficaces à cet effet. Ainsi, on a déjà proposé d'éliminer les composés organiques sulfurés (mercaptans, dialkylsulfures et dialkyldisulfures) présents dans certains gaz résiduaires en les traitant par une solution aqueuse acide de peroxyde d'hydrogène en présence d'un catalyseur au fer (Interox, Effluent & Water Treatment Journal, août 1979). Les traitements connus jusqu'à présent ne permettent cependant pas d'oxyder quantitativement tous les composés organiques sulfurés et de les convertir totalement en des produits non odorants. Plus particulièrement, les dialkyldisulfures sont particulièrement rebelles à une oxydation complète et il n'est pas possible d'éliminer complètement les mauvaises odeurs et les colorations dont ces composés sont responsables par les traitements connus.

La présente invention a pour but d'augmenter le taux d'oxydation des composés organiques sulfurés présents dans les eaux et les gaz de rejet et notamment celui des dialkyldisulfures et plus particulièrement du diméthyldisulfure, et leur transformation en composés non odorants, non toxiques et non colorés.

L'invention concerne à cet effet un procédé pour le traitement des eaux et des gaz de rejet contenant des dialkyldisulfures par oxydation catalytique de ces composés au moyen d'un composé peroxydé en milieu aqueux selon lequel on utilise des ions cuivre divalent comme catalyseur et on maintient le milieu à un pH inférieur à 6,5.

Le procédé s'applique particulièrement bien aux effluents contenant des dialkyldisulfures en $C_2$-$C_{10}$. Les meilleurs résultats ont été obtenus lors de l'oxydation du diméthyldisulfure. Le procédé peut également être appliqué au traitement d'effluents contenant en outre d'autres composés organiques sulfurés.

Les ions cuivre peuvent être apportés au milieu réactionnel aqueux sous la forme de n'importe quel composé organique ou inorganique, soluble aux concentrations utilisées et dissociable en ions. De préférence, on utilise des halogénures tels que les fluorure, chlorure et bromure, le nitrate, le sulfate, le chlorate, le bromate, l'iodate, le perchlorate, le métaborate, le dichromate, le fluosilicate ou des carboxylates tels que l'acétate, le formiate et l'oxalate. Les meilleurs résultats ont été obtenus avec l'acétate, le nitrate, le sulfate et le chlorure. Le sulfate de cuivre convient particulièrement bien.

On peut également utiliser des mélanges de composés du cuivre.

La quantité d'ions cuivre à mettre en œuvre dans le milieu réactionnel peut varier dans de larges limites. Elle est en général de 0,000 1 à 5 grammes par litre. De préférence, on utilise une solution contenant de 0,001 à 1 gramme d'ions cuivre par litre de milieu. De bons résultats ont été obtenus en mettant en œuvre de 0,001 à 0,100 gramme d'ions cuivre par litre de milieu.

Divers types de composés peroxydés peuvent être utilisés comme agents d'oxydation. Ainsi, on peut utiliser des composés peroxydés organiques ou inorganiques. De préférence, on utilise des composés peroxydés choisis parmi les peracides carboxyliques tels que l'acide performique, l'acide peracétique, l'acide perpropionique, l'acide perbutyrique, les acides perphtaliques et leurs dérivés substitués, les sels correspondant à ces peracides tels que les sels de métaux alcalins et alcalino-terreux et d'ammonium, les persels inorganiques tels que les percarbonates, perborates, persulfates, persilicates et perphosphates de tous types de métaux alcalins et alcalino-terreux et d'ammonium, les peracides inorganiques tels que les acides peroxy-mono- et -di-sulfuriques, les acides peroxyphosphoriques, les peroxydes métalliques, plus particulièrement de métaux alcalins et alcalino-terreux, tels que les peroxydes de sodium, potassium, calcium et magnésium, et le peroxyde d'hydrogène. De bons résultats ont été obtenus avec le peroxyde d'hydrogène, l'acide peroxymonosulfurique et l'acide peracétique. Le peroxyde d'hydrogène convient particulièrement bien. On peut également utiliser des mélanges de composés peroxydés.

La quantité de composés peroxydés à mettre en œuvre peut varier dans de larges limites. En général, on met le composé peroxydé en œuvre à des doses telles que le rapport de la quantité de composé peroxydé exprimée en moles d'équivalent $H_2O_2$ à 100 % par rapport à la quantité de dialkyldisulfures exprimée en moles d'équivalent $H_2S$ est supérieur à 0,2 et de préférence supérieur à 0,5.

En général, pour des raisons économiques, on n'utilise pas des rapports molaires supérieurs à 20. Le plus souvent les rapports molaires sont inférieurs à 10. On a obtenu de bons résultats en utilisant des rapports molaires de 1 à 6 et de préférence de 3 à 6.

Lorsque le procédé est appliqué au traitement d'effluents contenant en outre d'autres composés organiques sulfurés la quantité de peroxyde d'hydrogène mise en œuvre est bien entendu augmentée de la quantité nécessaire pour les oxyder.

En général, le procédé selon l'invention est réalisé à pH acide, c'est-à-dire à un pH inférieur à 6,5. De bons résultats sont obtenus en maintenant le pH à une valeur de 2,5 à 6,5 et de préférence de 3 à 5. Les meilleurs résultats sont obtenus avec un pH d'environ 4. Pour atteindre le pH souhaité, on peut acidifier la solution aqueuse par addition de divers types d'acides. On peut utiliser à cette fin des acides organiques ou inorganiques. De préférence, les acides sont choisis parmi l'acide acétique, l'acide formique, l'acide sulfurique, l'acide chlorhydrique, l'acide nitrique et l'acide phosphorique. De bons résultats ont été obtenus avec l'acide sulfurique et l'acide acétique. Les meilleurs résultats ont été obtenus avec l'acide sulfurique.

La température à laquelle est réalisé le traitement des effluents est en général choisie entre la température ambiante et la température d'ébullition du milieu réactionnel. On préfère en général utiliser des températures supérieures à 40 °C de manière à réduire la durée du traitement. De bons résultats sont obtenus à des températures de 50 à 90 °C et de préférence de 60 à 80 °C.

La durée de réaction est variable dans chaque cas. En général, elle est supérieure à 0,5 minute et le plus souvent supérieure à 2 minutes. Le temps de réaction ne dépasse en général pas 200 minutes et le plus souvent 100 minutes. De bons résultats ont été obtenus avec des temps de réaction de 2 à 100 minutes.

Diverses techniques opératoires et divers appareils connus en eux-mêmes peuvent être utilisés pour réaliser le procédé selon l'invention. On peut également prévoir une introduction unique ou une introduction différée du composé peroxydé et du catalyseur.

En général, lors du traitement des eaux de rejet, on procède, si nécessaire, à un ajustement préalable du pH et de la température et ensuite on introduit conjointement ou distinctement, le composé peroxydé et le catalyseur, éventuellement sous forme de solution aqueuse de manière à atteindre les concentrations désirées.

Pour traiter les gaz de rejet, on les met, en général, en contact avec une solution aqueuse contenant le composé peroxydé et le catalyseur et ayant le pH et la température souhaités. Le milieu aqueux peut éventuellement contenir d'autres additifs tels que des produits susceptibles d'augmenter la solubilité des dialkyldisulfures comme les alcools et plus particulièrement le méthanol. On peut ainsi laver les gaz à traiter dans des appareils tels que des scrubbers humides, par exemple des scrubbers à empilage travaillant à co-courant ou, de préférence, à contre-courant.

Le procédé selon l'invention peut être appliqué à divers types d'effluents contenant des dialkyldisulfures, tant liquides que gazeux.

Ainsi, il peut être appliqué au traitement des effluents municipaux et des effluents des papeteries, des industries textiles (de fabrication de rayonne viscose par exemple), des tanneries, des exploitations agricoles et des industries alimentaires (clos d'équarrissage, traitement des poissons, brasseries, fabrication d'huile de soya), des industries pharmaceutiques, des installations pétrochimiques (raffineries), des installations de fabrication de divers composés à base de soufre (pesticides, huiles de coupe, agents mouillants, additifs des plastiques et caoutchoucs), des industries métallurgiques et de traitement des minerais, et des installations de désulfuration de la fonte. Le procédé selon l'invention convient particulièrement bien pour le traitement des effluents de papeteries.

Le procédé selon l'invention permet de traiter de façon avantageuse, les liqueurs noires obtenues par cuisson des copeaux de bois dans un procédé kraft. Dans ce cas, on procède avantageusement à une oxydation préalable à l'air des liqueurs noires, éventuellement diluées, selon une technique connue en elle-même, avant de les soumettre au procédé selon l'invention. Les liqueurs noires sont ensuite concentrées et les boues obtenues sont calcinées dans des chaudières de récupération. Les fumées produites sont nettement moins odorantes.

Il permet également de traiter de façon avantageuse certains effluents aqueux colorés et malodorants des fabrications de pâte kraft, tels que les condensats de cuisson, les condensats d'évaporation de la liqueur noire, les liquides de lavage de la pâte écrue et certains effluents de blanchiment. Le procédé convient tout particulièrement pour le traitement des condensats de cuisson qui contiennent des proportions plus importantes de diméthyldisulfure, produit particulièrement difficile à oxyder selon les techniques connues.

Enfin, il est également avantageux de capter les gaz malodorants produits par une installation de cuisson selon le procédé kraft, les rassembler et les soumettre à un traitement selon l'invention.

On donne ci-après des exemples de réalisation pratique de l'invention mettant en évidence l'efficacité du procédé selon l'invention (exemples 2 et 4 à 7) en le comparant à un procédé dans lequel on met en œuvre un catalyseur au fer (exemples 1 et 3 donnés à titre comparatif).

Exemples d'oxydation du diméthyldisulfure par le peroxyde d'hydrogène

Une solution synthétique est préparée à partir de 1,5 ml de diméthyldisulfure porté à 5 l avec de l'eau déminéralisée contenant 2 ml de méthanol par litre pour permettre la dissolution du diméthyldisulfure normalement insoluble dans l'eau pure. La solution contient 318 mg de diméthyldisulfure soit 230 mg de sulfures exprimés en équivalent $H_2S$ par litre.

La solution est acidifiée à pH 4 par addition de $H_2SO_4$ et portée à une température de 70 °C. On introduit ensuite le catalyseur à raison de 50 mg d'ions métalliques par litre.

Deux catalyseurs sont examinés : le sulfate de cuivre, selon l'invention (exemples 2 et 4 à 7), et le sulfate de fer à titre de comparaison (exemples 1 et 3).

Des doses variables de peroxyde d'hydrogène sont introduites.

Le diméthyldisulfure résiduaire est mesuré par chromatographie en phase vapeur après 30 ou 60 minutes de réaction.

Les conditions opératoires, les teneurs en diméthyldisulfure (DMDS) résiduaire et son taux de destruction sont donnés au Tableau 1.

Tableau 1

| Ex. | Catalyseur | $H_2O_2$ sulfures exprimés en $H_2S$ | Temps | DMDS résiduaire | Taux de destruction du DMDS |
|---|---|---|---|---|---|
| | | mole/mole | min | mg/l | % |
| 1 | $Fe_2(SO_4)_3$ | 1,44 | 30 | 86 | 73 |
| 2 | $CuSO_4$ | 1,44 | 30 | 46 | 86 |
| 3 | $Fe_2(SO_4)_3$ | 2,87 | 60 | 48 | 85 |
| 4 | $CuSO_4$ | 2,87 | 30 | 14 | 96 |
| 5 | $CuSO_4$ | 2,87 | 60 | 9 | 97 |
| 6 | $CuSO_4$ | 4,31 | 30 | 4 | 99 |
| 7 | $CuSO_4$ | 4,31 | 60 | 1 | 99,7 |

**Revendications**

1. Procédé pour le traitement des eaux et des gaz de rejet contenant des dialkyldisulfures par oxydation catalytique de ces composés au moyen d'un composé peroxydé en milieu aqueux caractérisé en ce que l'on utilise des ions cuivre divalent comme catalyseur, et l'on maintient le milieu à un pH inférieur à 6,5.

2. Procédé selon la revendication 1, caractérisé en ce que l'on met en œuvre de 0,001 à 1 gramme d'ions cuivre par litre de milieu.

3. Procédé selon la revendication 1 ou 2, caractérisé en ce que les ions cuivre sont apportés au milieu sous la forme de composés choisis parmi les halogénures, le nitrate, le sulfate, le chlorate, le bromate, l'iodate, le perchlorate, le métaborate, le dichromate, le fluosilicate, les carboxylates et leurs mélanges.

4. Procédé selon l'une quelconque des revendications 1 à 3, caractérisé en ce que l'on choisit le composé peroxydé parmi les peracides carboxyliques et les sels correspondants, les persels inorganiques, les peracides inorganiques, les peroxydes métalliques, le peroxyde d'hydrogène et leurs mélanges.

5. Procédé selon la revendication 4, caractérisé en ce que l'on choisit le composé peroxydé parmi le peroxyde d'hydrogène, l'acide peroxymonosulfurique, l'acide peracétique et leurs mélanges.

6. Procédé selon l'une quelconque des revendications 1 à 5, caractérisé en ce que l'on met en œuvre le composé peroxydé en quantité telle que le rapport de la quantité de composé peroxydé exprimée en moles d'équivalent $H_2O_2$ à 100 % par rapport à la quantité de dialkyldisulfures exprimée en moles d'équivalent $H_2S$ est de 0,5 à 10.

7. Procédé selon l'une quelconque des revendications 1 à 6, caractérisé en ce que le milieu est maintenu à un pH de 2,5 à 6,5.

8. Procédé selon l'une quelconque des revendications 1 à 7, caractérisé en ce que le milieu est maintenu à une température de 50 à 90 °C.

9. Procédé selon l'une quelconque des revendications 1 à 8, caractérisé en ce qu'il est appliqué à des gaz de rejet que l'on lave au moyen du milieu.

10. Procédé selon la revendication 9, caractérisé en ce que l'on ajoute un alcool au milieu.

11. Procédé selon l'une quelconque des revendications 1 à 10, caractérisé en ce qu'il est appliqué au traitement des effluents des industries papetières.

## Claims

1. Process for the treatment of waste waters and waste gases containing dialkyl disulphides by catalytic oxidation of these compounds by means of a peroxide compound in an aqueous medium, characterised in that divalent copper ions are used as the catalyst and that the medium is kept at a pH below 6.5.

2. Process according to Claim 1, characterised in that from 0.001 to 1 gram of copper ions is employed per litre of medium.

3. Process according to Claim 1 or 2, characterised in that the copper ions are introduced into the medium in the form of compounds chosen from among the halides, the nitrate, the sulphate, the chlorate, the bromate, the iodate, the perchlorate, the metaborate, the dichromate, the fluosilicate, the carboxylates and mixtures of these.

4. Process according to any one of Claims 1 to 3, characterised in that the peroxide compound is chosen from among the percarboxylic acids and the corresponding salts, the inorganic per-salts, the inorganic per-acids, the metal peroxides, hydrogen peroxide and the mixture of these.

5. Process according to Claim 4, characterised in that the peroxide compound is chosen from among hydrogen peroxide, peroxymonosulphuric acid, peracetic acid and mixtures of these.

6. Process according to any one of Claims 1 to 5, characterised in that the peroxide compound is used in such an amount that the ratio of the amount of peroxide compound expressed in equivalent moles of 100 % strength $H_2O_2$ relative to the amount of dialkyldisulphides expressed in equivalent moles of $H_2S$ is from 0.5 to 10.

7. Process according to any one of Claims 1 to 6, characterised in that the medium is kept at a pH of 2.5 to 6.5.

8. Process according to any one of Claims 1 to 7, characterised in that the medium is kept at a temperature of 50 to 90 °C.

9. Process according to any one of Claims 1 to 8, characterised in that it is applied to waste gases which are washed by means of the medium.

10. Process according to Claim 9, characterised in that an alcohol is added to the medium.

11. Process according to any one of Claims 1 to 10, characterised in that it is applied to the treatment of effluents from the papermaking industries.

## Ansprüche

1. Verfahren zur Behandlung von Dialkyldisulfide enthaltenden Abwässern und Abgasen durch katalytische Oxydation dieser Verbindungen mittels einer Peroxidverbindung in wässrigem Milieu, dadurch gekennzeichnet, daß man zweiwertige Kupferionen als Katalysator verwendet und das Milieu bei einem pH-Wert unterhalb von 6,5 hält.

2. Verfahren gemäß Anspruch 1, dadurch gekennzeichnet, daß man 0,001 bis 1 Grammionen Kupfer je Liter Milieu einsetzt.

3. Verfahren gemäß Anspruch 1 oder 2, dadurch gekennzeichnet, daß die Kupferionen in das Milieu eingebracht werden in Form von Verbindungen ausgewählt unter den Halogeniden, dem Nitrat, dem Sulfat, dem Chlorat, dem Bromat, dem Jodat, dem Perchlorat, dem Metaborat, dem Dichromat, dem Fluosilicat, den Carbonsäuresalzen und deren Mischungen.

4. Verfahren gemäß einem der Ansprüche 1 bis 3, dadurch gekennzeichnet, daß man die Peroxidverbindung auswählt unter den Percarbonsäuren und den entsprechenden Salzen, den anorganischen Persalzen, den anorganischen Persäuren, den Metallperoxiden, dem Wasserstoffperoxid und deren Mischungen.

5. Verfahren gemäß Anspruch 4, dadurch gekennzeichnet, daß man die Peroxidverbindung auswählt unter dem Wasserstoffperoxid, der Peroximonoschwefelsäure, der Peressigsäure und deren Mischungen.

6. Verfahren gemäß einem der Ansprüche 1 bis 5, dadurch gekennzeichnet, daß man die Peroxidverbindung in einer solchen Menge einsetzt, daß das Mengenverhältnis von Peroxidverbindung ausgedrückt in Moläquivalenten 100 %igem $H_2O_2$ zu der Menge an Dialkyldisulfiden ausgedrückt in Moläquivalenten $H_2S$ im Bereich von 0,5 bis 10 liegt.

7. Verfahren gemäß einem der Ansprüche 1 bis 6, dadurch gekennzeichnet, daß das Milieu bei einem pH-Wert von 2,5 bis 6,5 gehalten wird.

8. Verfahren gemäß einem der Ansprüche 1 bis 7, dadurch gekennzeichnet, daß das Milieu bei einer Temperatur von 50 bis 90 °C gehalten wird.

9. Verfahren gemäß einem der Ansprüche 1 bis 8, dadurch gekennzeichnet, daß es angewandt wird auf ein Abgas, das man mit dem Milieu wäscht.

10. Verfahren gemäß Anspruch 9, dadurch gekennzeichnet, daß man einen Alkohol dem Milieu zusetzt.

11. Verfahren gemäß einem der Ansprüche 1 bis 10, dadurch gekennzeichnet, daß es angewandt wird auf die Behandlung von Abgasen und Abwässern der Papierindustrie.